(19) Europäisches Patentamt
European Patent Office
Office européen des brevets

(11) EP 4 760 818 A1

(12) **EUROPEAN PATENT APPLICATION**
published in accordance with Art. 153(4) EPC

(43) Date of publication:
**17.06.2026 Bulletin 2026/25**

(21) Application number: **24853482.8**

(22) Date of filing: **17.07.2024**

(51) International Patent Classification (IPC):
*H01M 4/587* (2010.01)   *H01M 10/0525* (2010.01)
*H01M 4/133* (2010.01)   *H01M 4/04* (2006.01)

(52) Cooperative Patent Classification (CPC):
Y02E 60/10

(86) International application number:
**PCT/CN2024/105936**

(87) International publication number:
**WO 2025/036070 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311017464**

(71) Applicant: **Ningde Amperex Technology Limited
Ningde, Fujian 352100 (CN)**

(72) Inventor: **LI, Dalu
Ningde, Fujian 352100 (CN)**

(74) Representative: **Kraus & Lederer PartGmbB
Thomas-Wimmer-Ring 15
80539 München (DE)**

(54) **NEGATIVE ELECTRODE ACTIVE MATERIAL, SECONDARY BATTERY, AND ELECTRONIC DEVICE**

(57)   A negative electrode active material, a secondary battery, and an electronic device are provided. The negative electrode active material includes graphite, where Dn10, Dv50, and Dv90 of the negative electrode active material satisfy: D = (Dv90 - Dn10) / Dv50, and $0.8 \leq D \leq 1.5$. The Dn10 of the negative electrode active material is 1 $\mu$m to 5 $\mu$m. In an X-ray diffraction pattern of the negative electrode active material, a peak intensity ratio of a characteristic peak C004 to a characteristic peak C110 is I. The negative electrode active material satisfies: $2 \leq I/D \leq 4$. The negative electrode active material can be used to improve the cycling performance of the secondary battery.

FIG. 1

EP 4 760 818 A1

## Description

The present application claims priority to Chinese Patent Application No. 202311017464.9, filed on August 11, 2023 and entitled "NEGATIVE ELECTRODE ACTIVE MATERIAL, NEGATIVE ELECTRODE PLATE, SECONDARY BATTERY, AND ELECTRONIC DEVICE," which is incorporated herein by reference in its entirety.

## TECHNICAL FIELD

The present application relates to the field of electrochemical technologies, and in particular, to a negative electrode active material, a secondary battery, and an electronic device.

## BACKGROUND

The energy storage industry, as a supporting industry and key driver for energy structure adjustment, has broad application prospects in various fields such as traditional power generation, transmission and distribution, power demand side, auxiliary services, and new energy. Currently, energy storage primarily relies on secondary batteries, such as lithium-ion batteries, which are widely used in industrial production and daily life due to their outstanding advantages including high energy density, low self-discharge rate, long cycle life, and stable discharge performance.

The negative electrode active material in the negative electrode plate of lithium-ion batteries is one of the key factors affecting battery performance. Traditional artificial graphite, used as a negative electrode active material, requires improvement in cycling performance. Currently, natural graphite, which is low-cost and abundant in reserves available, suffers from issues such as cycling swelling and low capacity retention rate during cycling, which also adversely affect the cycling performance of lithium-ion batteries.

## SUMMARY

An objective of the present application is to provide a negative electrode active material, a secondary battery, and an electronic device to improve the cycling performance, swelling behavior, and rate performance of the secondary battery. The specific technical solution is as described below.

According to a first aspect of the present application, a negative electrode active material is provided, including graphite, where Dn10, Dv50, and Dv90 of the negative electrode active material satisfy: $D = (Dv90 - Dn10) / Dv50$, and $0.8 \leq D \leq 1.5$; Dn10 of the negative electrode active material is 1 $\mu$m to 5 $\mu$m; in an X-ray diffraction pattern of the negative electrode active material, a peak intensity ratio of a characteristic peak C004 to a characteristic peak C110 is I; and the negative electrode active material satisfies: $2 \leq I/D$ 4. With values of D, Dn10, and I/D controlled within the above ranges, the resulting negative electrode active material exhibits an appropriate and relatively narrow particle size distribution, and this can reduce the tortuosity of active ion diffusion in the electrode plate while negative electrode active material possesses strong isotropic properties. When applied to a negative electrode plate of a secondary battery, the negative electrode active material can improve the cycling performance, swelling behavior, and rate performance of the secondary battery.

In some embodiments of the present application, $2 \leq I \leq 6$. It indicates that the negative electrode active material not only possesses a narrow particle size distribution and strong isotropic properties but also balances the diffusion pathways of active ions and the deformation of the negative electrode plate during the charge-discharge process of the secondary battery, further improving the cycling performance and swelling behavior of the secondary battery.

In some embodiments of the present application, the negative electrode active material satisfies at least one of the following conditions: (1) Dn10 is 2 $\mu$m to 4 $\mu$m; (2) Dv90 is 14 $\mu$m to 30 $\mu$m; (3) Dv50 is 8 $\mu$m to 15 $\mu$m; or (4) $2 \leq I \leq 4$. When the negative electrode active material satisfies at least one of the above conditions (1) to (4), the application of the material to a negative electrode plate of a secondary battery can improve the cycling performance, swelling behavior, and rate performance of the secondary battery.

In some embodiments of the present application, a sphericity C of the negative electrode active material is defined as $C = 4\pi A / P^2$, and $0.5 \leq C \leq 1$, where A is an area of an orthographic projection of a particle of the negative electrode active material, P is a perimeter of the orthographic projection of the particle of the negative electrode active material; and the negative electrode active material satisfies: $1.8 \leq D/C + 1 \leq 4$. When the sphericity C and D/C + 1 of the negative electrode active material are within the above ranges, the negative electrode active material exhibits an appropriate sphericity, an appropriate and relatively narrow particle size distribution, and a well-matched relationship between sphericity and particle size. This can further improve the cycling performance and swelling behavior of the secondary battery while also enabling the secondary battery to achieve high energy density and good rate performance.

In some embodiments of the present application, the negative electrode active material satisfies at least one of the following conditions: (a) a tap density TD of the negative electrode active material is 0.8 g/cm$^3$ to 1.2 g/cm$^3$; (b) a

graphitization degree G of the negative electrode active material is 90% to 96%; or (c) a specific capacity W of the negative electrode active material is 344 mAh/g to 358 mAh/g. When the negative electrode active material satisfies at least one of the above conditions (a) to (c), the application of the material to a negative electrode plate of a secondary battery can improve the cycling performance, swelling behavior, and rate performance of the secondary battery.

In some embodiments of the present application, $0.8 \leq D \leq 1.3$.

In some embodiments of the present application, $2.4 \leq I/D \leq 3.5$.

In some embodiments of the present application, in a Raman spectrum of the negative electrode active material, a peak intensity ratio Id/Ig of a d peak to a g peak is 0.1 to 0.3. When the Id/Ig value of the negative electrode active material falls within the above range, the negative electrode active material exhibits an appropriate defect level and an appropriate and relatively narrow particle size distribution, further improving the cycling performance and swelling behavior of the secondary battery while enabling the secondary battery to achieve good rate performance.

In some embodiments of the present application, the graphite includes natural graphite and artificial graphite. Natural graphite provides high specific capacity and superior kinetics, while artificial graphite provides good cycling performance. The combined use of both types of graphite enables further improvement in the cycling performance and rate performance of the secondary battery.

According to a second aspect of the present application, a secondary battery is provided, including a positive electrode plate, a negative electrode plate, and an electrolyte, where the negative electrode plate includes a negative electrode current collector and a negative electrode material layer disposed on at least one surface of the negative electrode current collector, the negative electrode material layer including the negative electrode active material according to any one of the above embodiments.

In some embodiments of the present application, the negative electrode plate satisfies at least one of the following conditions: (i) a porosity of the negative electrode plate is 25% to 40%; or (ii) an OI value of the negative electrode plate is 8 to 15. When the negative electrode plate satisfies at least one of the above conditions (i) or (ii), the application of the negative electrode plate to a secondary battery is advantageous for improving the cycling performance and swelling behavior of the secondary battery.

According to a third aspect of the present application, an electronic device is provided, including the secondary battery according to any one of the above embodiments.

The beneficial effects of the present application are as follows:

The present application provides a negative electrode active material including graphite, where Dn10, Dv50, and Dv90 of the negative electrode active material satisfy: D = (Dv90 - Dn10) / Dv50, and $0.8 \leq D \leq 1.5$; Dn10 of the negative electrode active material is 1 $\mu$m to 5 $\mu$m; in an X-ray diffraction pattern of the negative electrode active material, a peak intensity ratio of the characteristic peak C004 to the characteristic peak C110 is I; and the negative electrode active material satisfies: $2 \leq I/D \leq 4$. The negative electrode active material provided in the present application can be used to improve the cycling performance of the secondary battery.

Of course, implementing any product or method of the present application does not necessarily achieve all the advantages described above simultaneously.

## BRIEF DESCRIPTION OF DRAWINGS

To clearly illustrate the technical solutions in some embodiments of the present application or in the prior art, the drawings required for describing these embodiments or the prior art are briefly introduced below. It is apparent that the drawings described below are only some embodiments of the present application, and those skilled in the art can obtain other embodiments based on these drawings.

FIG. 1 is an electron microscope image of the negative electrode active material in Example 1-1;

FIG. 2 is an X-ray diffraction pattern of the negative electrode active material in Example 1-3;

FIG. 3 is an X-ray diffraction pattern of the negative electrode plate in Example 1-3;

FIG. 4 is a graph showing changes in cycle capacity retention rate of lithium-ion batteries in Example 1-1 and Comparative Example 1-1;

FIG. 5 is a graph showing changes in thickness swelling ratio of lithium-ion batteries in Example 1-1 and Comparative Example 1-1; and

FIG. 6 is a Raman spectrum of the negative electrode active material in Example 1-3.

## DETAILED DESCRIPTION

The technical solutions in some embodiments of the present application are clearly and completely described below with reference to the drawings in these embodiments of the present application. It is apparent that the described embodiments are only some rather than all embodiments of the present application. All other embodiments obtained by those skilled in the art based on the present application shall fall within the scope of protection of the present application.

It should be noted that in the specific embodiments of the present application, lithium-ion batteries are used as an example of secondary batteries to explain the present application, but the secondary batteries of the present application are not limited to lithium-ion batteries.

According to a first aspect of the present application, a negative electrode active material is provided, including graphite, where Dn10, Dv50, and Dv90 of the negative electrode active material satisfy: $D = (Dv90 - Dn10) / Dv50$, and $0.8 \leq D \leq 1.5$. In some embodiments of the present application, $0.8 \leq D \leq 1.3$. For example, the value of D may be 0.8, 0.9, 1, 1.1, 1.2, 1.3, 1.4, 1.5, or a range defined by any two of these values. Dn10 of the negative electrode active material is 1 μm to 5 μm; in some embodiments of the present application, Dn10 of the negative electrode active material is 2 μm to 4 μm. For example, Dn10 of the negative electrode active material may be 1 μm, 1.5 μm, 2 μm, 2.5 μm, 3 μm, 3.5 μm, 4 μm, 4.5 μm, 5 μm, or a range defined by any two of these values. In an X-ray diffraction pattern of the negative electrode active material, a peak intensity ratio of a characteristic peak C004 to a characteristic peak C110 is I; and the negative electrode active material satisfies: $2 \leq I/D \leq 4$. In some embodiments of the present application, $2.4 \leq I/D \leq 3.5$. For example, the value of I/D may be 2.4, 2.5, 2.6, 2.7, 2.8, 2.9, 3, 3.1, 3.2, 3.3, 3.4, 3.5, or a range defined by any two of these values.

The inventor has found that the D value and Dn10 can characterize the particle size distribution of the negative electrode active material. When the D value is too small, for example, less than 0.8, the particle size distribution range of the negative electrode active material becomes excessively narrow, significantly reducing the fine powder content. This leads to impaired electron conduction between particles, impairing the conductive network and consequently degrading the cycling performance and rate performance of the secondary battery. Conversely, when the D value is too large, for example, greater than 1.5, the particle size distribution range of the negative electrode active material becomes overly broad. This results in longer diffusion pathways for active ions such as lithium ions in the negative electrode plate containing the negative electrode active material, increasing the diffusion impedance of active ions and impairing the cycling performance and rate performance of the secondary battery. An I/D within the above range indicates a moderate particle size distribution of the negative electrode active material, and this can reduce the tortuosity of active ion diffusion in the electrode plate, and the isotropic properties of the negative electrode active material is strong, facilitating the improvement in the cycling performance and swelling behavior of the secondary battery. With the values of D, Dn10, and I/D controlled within the above ranges, the resulting negative electrode active material exhibits an appropriate and relatively narrow particle size distribution, and this can reduce the tortuosity of active ion diffusion in the electrode plate while negative electrode active material possesses strong isotropic properties. When applied to a negative electrode plate of a secondary battery, the negative electrode active material can improve the cycling performance, swelling behavior, and rate performance of the secondary battery. In the present application, active ions refer to ions participating in electrochemical reactions during the charge-discharge process of the secondary battery, specifically including lithium ions or sodium ions.

In some embodiments of the present application, $2 \leq I \leq 6$. In some embodiments of the present application, $2 \leq I \leq 4$. For example, the value of I may be 2, 2.5, 3, 3.5, 4, 4.5, 5, 5.5, 6, or a range defined by any two of these values. It indicates that the negative electrode active material not only possesses a narrow particle size distribution and strong isotropic properties but also balances the diffusion pathways of active ions and the deformation of the negative electrode plate during the charge-discharge process of the secondary battery, further improving the cycling performance and swelling behavior of the secondary battery.

In some embodiments of the present application, Dv90 of the negative electrode active material is 14 μm to 30 μm. For example, Dv90 of the negative electrode active material may be 14 μm, 15 μm, 16 μm, 17 μm, 18 μm, 19 μm, 20 μm, 21 μm, 22 μm, 23 μm, 24 μm, 25 μm, 26 μm, 27 μm, 28 μm, 29 μm, 30 μm, or a range defined by any two of these values. When the negative electrode active material satisfies the ranges of D, Dn10, and I/D described above, and Dv90 of the negative electrode active material also falls within the above range, it indicates that the negative electrode active material exhibits an appropriate particle size and an appropriate and relatively narrow particle size distribution, and this can reduce the tortuosity of active ion diffusion in the electrode plate while negative electrode active material possesses strong isotropic properties. When applied to a negative electrode plate of a secondary battery, the negative electrode active material can improve the cycling performance, swelling behavior, and rate performance of the secondary battery.

In some embodiments of the present application, Dv50 of the negative electrode active material is 8 μm to 15 μm. For example, Dv50 of the negative electrode active material may be 8 μm, 9 μm, 10 μm, 11 μm, 12 μm, 13 μm, 14 μm, 15 μm, or a range defined by any two of these values. When the negative electrode active material satisfies the ranges of D, Dn10, and I/D described above, and Dv50 of the negative electrode active material also falls within the above range, it indicates that the negative electrode active material exhibits an appropriate particle size and an appropriate and relatively narrow particle size distribution, and this can reduce the tortuosity of active ion diffusion in the electrode plate while negative electrode active material possesses strong isotropic properties. When applied to a negative electrode plate of a secondary battery, the negative electrode active material can improve the cycling performance, swelling behavior, and rate performance of the secondary battery.

In some embodiments of the present application, a sphericity C of the negative electrode active material is

defined as C = $4\pi A / P^2$, and $0.5 \leq C \leq 1$, where A is an area of an orthographic projection of a particle of the negative electrode active material, and P is a perimeter of the orthographic projection of the particle of the negative electrode active material; and the negative electrode active material satisfies: $1.8 \leq D/C + 1 \leq 4$. For example, the value of C may be 0.5, 0.55, 0.6, 0.65, 0.7, 0.75, 0.8, 0.85, 0.9, 0.95, 1, or a range defined by any two of these values; the value of D/C + 1 may be 1.8, 2, 2.2, 2.5, 2.7, 3, 3.3, 3.5, 3.8, 4, or a range defined by any two of these values. When the sphericity C of the negative electrode active material falls within the above range, it indicates that the negative electrode active material exhibits an appropriate sphericity, facilitating the diffusion, intercalation, and deintercalation of active ions and further improving the cycling performance of the secondary battery. In addition, the particles of the negative electrode active material can be closely packed, so that the negative electrode plate has a high compaction density, thereby contributing to the development of secondary batteries with relatively high energy density. Thus, when the negative electrode active material satisfies the ranges of D, Dn10, and I/D described above, and the sphericity C and D/C + 1 of the negative electrode active material falls within the above ranges, the negative electrode active material exhibits an appropriate sphericity, an appropriate and relatively narrow particle size distribution, and a well-matched relationship between sphericity and particle size are well-matched. This can further improve the cycling performance and swelling behavior of the secondary battery while also enabling the secondary battery to achieve high energy density and good rate performance.

In some embodiments of the present application, a tap density TD of the negative electrode active material is 0.8 g/cm³ to 1.2 g/cm³. For example, the tap density TD of the negative electrode active material may be 0.8 g/cm³, 0.9 g/cm³, 0.95 g/cm³, 1 g/cm³, 1.05 g/cm³, 1.1 g/cm³, 1.15 g/cm³, 1.2 g/cm³, or a range defined by any two of these values. When the tap density of the negative electrode active material falls within the above range, less dispersant is required during the slurry preparation process, the resulting slurry is more stable and less prone to settling, and the particles in the negative electrode plate can closely contact each other, improving electronic conductivity and active ion diffusion rate, thereby improving the cycling performance of the secondary battery. Thus, when the negative electrode active material satisfies the ranges of D, Dn10, and I/D described above, and the tap density TD of the negative electrode active material falls within the above range, the negative electrode active material exhibits an appropriate tap density and an appropriate and relatively narrow particle size distribution, improving the cycling performance, swelling behavior, and rate performance of the secondary battery while enhancing its processability during manufacturing.

In some embodiments of the present application, a graphitization degree G of the negative electrode active material is 90% to 96%. For example, the graphitization degree G of the negative electrode active material may be 90%, 90.5%, 91%, 91.5%, 92%, 92.5%, 93%, 93.5%, 94%, 94.5%, 95%, 95.5%, 96%, or a range defined by any two of these values. When the graphitization degree G falls within the above range, it indicates that the negative electrode active material exhibits a low graphitization degree, facilitating the improvement in the cycling performance and swelling behavior of the secondary battery. Thus, when the negative electrode active material satisfies the ranges of D, Dn10, and I/D described above, and the graphitization degree of the negative electrode active material falls within the above range, the negative electrode active material exhibits an appropriate graphitization degree and an appropriate and relatively narrow particle size distribution, further improving the cycling performance and swelling behavior of the secondary battery while enabling the secondary battery to achieve good rate performance.

In some embodiments of the present application, a specific capacity W of the negative electrode active material is 344 mAh/g to 358 mAh/g. For example, the specific capacity W of the negative electrode active material may be 344 mAh/g, 345 mAh/g, 346 mAh/g, 347 mAh/g, 348 mAh/g, 349 mAh/g, 350 mAh/g, 351 mAh/g, 352 mAh/g, 353 mAh/g, 354 mAh/g, 355 mAh/g, 356 mAh/g, 357 mAh/g, 358 mAh/g, or a range defined by any two of these values. The negative electrode active material with a specific capacity W within the above range indicates that it has a high specific capacity. Thus, when the negative electrode active material satisfies the ranges of D, Dn10, and I/D described above, and exhibits a high specific capacity and an appropriate and relatively narrow particle size distribution, the cycling performance and swelling behavior of the secondary battery can be improved while enabling the secondary battery to achieve good rate performance and relatively high energy density.

In some embodiments of the present application, in a Raman spectrum of the negative electrode active material, a peak intensity ratio Id/Ig of a d peak to a g peak is 0.1 to 0.3. For example, the value of Id/Ig may be 0.1, 0.12, 0.14, 0.15, 0.16, 0.18, 0.2, 0.22, 0.24, 0.25, 0.26, 0.28, 0.3, or a range defined by any two of these values. When the Id/Ig value falls within the above range, it indicates that the negative electrode active material exhibits an appropriate defect level, facilitating the improvement in the cycling performance and swelling behavior. Thus, when the negative electrode active material satisfies the ranges of D, Dn10, and I/D described above, and its Id/Ig value falls within the above range, the negative electrode active material exhibits an appropriate defect level and an appropriate and relatively narrow particle size distribution, further improving the cycling performance and swelling behavior of the secondary battery while enabling the secondary battery to achieve good rate performance.

In the present application, at least one of the characteristics I, Dv90, sphericity C, tap density TD, graphitization degree G, specific capacity W, and Id/Ig of the negative electrode active material can be combined with the characteristics "D, Dn10, I/D," and all embodiments covered by such combinations fall within the scope of protection of the present application.

In some embodiments of the present application, the graphite includes natural graphite and artificial graphite. Natural graphite refers to graphite made from flakes produced from natural ore, and the origin, properties, and type of natural graphite used in these embodiments of the present application are not particularly limited. Artificial graphite refers to graphite prepared artificially to approximate the complete crystal structure of graphite. The artificial graphite can be obtained by processing precursor materials such as petroleum coke, coal coke, or pitch coke through graphitization, carbon coating, or other processes. In some embodiments of the present application, the cross-sectional morphology of the negative electrode plate along the thickness direction or the negative electrode active material powder can be observed using a scanning electron microscope to distinguish the two types of graphite: graphite particles with irregular shapes and a flat appearance are artificial graphite particles, while graphite particles with a rounded surface and higher sphericity are natural graphite particles. The type of precursor and processes such as graphitization methods, and carbonization methods for artificial graphite used in these embodiments of the present application are not particularly limited.

The preparation method of the negative electrode active material is not particularly limited in the present application, as long as the objectives of the present application can be achieved. For example, the preparation method of the negative electrode active material may include, but is not limited to, the following steps:

S1: Provide a natural graphite spherical precursor material with a particle size of 6 $\mu$m to 23 $\mu$m and a purity of 95% or higher;

S2: Provide raw coke with a particle size of 8 $\mu$m to 15 $\mu$m as an artificial graphite precursor component;

S3: Provide high-coking-value pitch as a binder;

S4: Mix the natural graphite component, artificial graphite precursor component, and binder at a mass ratio of (10 to 90):(10 to 90):(2 to 10) to obtain a mixed raw material, and feed the mixed raw material into a reactor;

S5: Perform heat treatment in the reactor at a temperature T1 of 300°C to 800°C for a heat treatment time t1 of 2 h to 8 h, during which the binder melts and bonds the natural graphite and artificial graphite precursor components together, and cool the resulting product to room temperature to obtain a sample;

S6: Place the sample in a crucible for low-temperature graphitization treatment to obtain a treated sample, with a low-temperature graphitization temperature T2 of 1800°C to 2600°C and a time t2 of 36 h to 48 h;

S7: Subject the treated sample to classification and spheroidization to achieve the desired particle size distribution and sphericity; and

S8: Sieve and demagnetize the sample to obtain the negative electrode active material.

The raw coke in S2 is not particularly limited in the present application, as long as the objectives of the present application can be achieved. For example, the raw coke may include, but is not limited to, at least one of petroleum coke, pitch coke, or coal coke. The high-coking-value pitch in S3 refers to pitch with a coking value of 30% to 80%. The classification and shaping in S7, or sieving and demagnetization in S8 are not particularly limited in the present application, as these are conventional steps known in the art.

Typically, the Dn10, Dv50, and Dv90 of the negative electrode active material can be controlled by adjusting the parameters of classification, shaping, and sieving, thereby controlling the value of D. The sphericity C and tap density of the negative electrode active material can also be controlled by adjusting the parameters of classification, shaping, and sieving. The value of I can be controlled by adjusting the mass proportion of the binder in the mixed raw material; for example, a lower mass proportion of the binder in the mixed raw material increases the value of I, while a higher mass proportion of the binder in the mixed raw material decreases the value of I. The graphitization degree G can be controlled by adjusting the temperature and time of the low-temperature graphitization treatment; for example, a higher temperature and longer time of the low-temperature graphitization treatment increase the graphitization degree G, while a lower temperature and shorter time of the low-temperature graphitization treatment decrease the graphitization degree G. The specific capacity W can be controlled by adjusting the proportion of natural graphite and artificial graphite precursor in the present application; for example, a lower proportion of the artificial graphite precursor in the present application increases the specific capacity W, while a higher proportion of the artificial graphite precursor in the present application decreases the specific capacity W. The Id/Ig value can be controlled by adjusting the temperature of the low-temperature graphitization treatment or the mass proportion of the binder in the mixed raw material; for example, a lower temperature of the low-temperature graphitization treatment or a higher mass proportion of the binder in the mixed raw material increases the Id/Ig value, while a higher temperature of the low-temperature graphitization treatment or a lower mass proportion of the binder in the mixed raw material decreases the Id/Ig value.

According to a second aspect of the present application, a secondary battery is provided, including a positive electrode plate, a negative electrode plate, and an electrolyte, where the negative electrode plate includes a negative electrode current collector and a negative electrode material layer disposed on at least one surface of the negative electrode current collector, the negative electrode material layer including the negative electrode active material according to any one of the above embodiments. The secondary battery of the present application has good cycling performance, swelling behavior, and rate performance.

The phrase "a negative electrode material layer disposed on at least one surface of the negative electrode current collector" means that the negative electrode material layer may be disposed on one surface in the thickness direction of the negative electrode current collector or on both surfaces in the thickness direction of the negative electrode current collector. It should be noted that the "surface" herein may be an entire region or a partial region of the surface of the negative electrode current collector. This is not particularly limited in the present application, as long as the objectives of the present application can be achieved.

In some embodiments of the present application, a porosity of the negative electrode plate is 25% to 40%. For example, the porosity of the negative electrode plate may be 25%, 26%, 27%, 28%, 29%, 30%, 31%, 32%, 33%, 34%, 35%, 36%, 37%, 38%, 39%, 40%, or a range defined by any two of these values. It indicates that the negative electrode plate exhibits a high porosity, facilitating the transmission and diffusion of active ions, thereby improving the cycling performance, swelling behavior, and rate performance of the secondary battery.

In some embodiments of the present application, an OI value of the negative electrode plate is 8 to 15. For example, the OI value of the negative electrode plate may be 8, 9, 10, 11, 12, 13, 14, 15, or a range defined by any two of these values. A negative electrode plate with an OI value within the above range exhibits good ion diffusion performance. The application of the negative electrode plate to a secondary battery is advantageous for improving the cycling performance and swelling behavior of the secondary battery.

In the present application, the negative electrode active material may further include other negative electrode active materials known in the prior art, including, but not limited to, mesocarbon microbeads, hard carbon, soft carbon, silicon, silicon-carbon materials, silicon-oxygen materials, Li-Sn alloy, Li-Sn-O alloy, Sn, SnO, $SnO_2$, spinel-structured lithiated $TiO_2$-$Li_4Ti_5O_{12}$, or Li-Al alloy. The present application imposes no limitation on the content of other negative electrode active materials, as long as the objectives of the present application can be achieved.

The negative electrode current collector is not particularly limited in the present application, as long as the objectives of the present application can be achieved. For example, the negative electrode current collector may include copper foil, aluminum foil, nickel foil, stainless steel foil, titanium foil, nickel foam, copper foam, or a polymer substrate coated with a conductive metal. The conductive metal includes, but is not limited to, copper, nickel, or titanium, and the material of the polymer substrate includes, but is not limited to, at least one of polyethylene, polypropylene, ethylene-propylene copolymer, polyethylene terephthalate, polyethylene naphthalate, or poly(p-phenylene terephthalamide). The thickness of the negative electrode current collector and the negative electrode material layer is not particularly limited in the present application, as long as the objectives of the present application can be achieved. For example, the thickness of the negative electrode current collector may be 4 $\mu$m to 12 $\mu$m, and the thickness of the single-sided negative electrode material layer may be 50 $\mu$m to 200 $\mu$m.

The negative electrode material layer of the present application may further include at least one of a conductive agent, a binder, or a thickener. The types of conductive agent and binder are not particularly limited in the present application, as long as the objectives of the present application can be achieved. For example, the conductive agent may include, but is not limited to, at least one of conductive carbon black (Super P), carbon nanotubes (CNT), carbon fibers, Ketjen black, graphene, metal materials, or conductive polymers. The carbon nanotubes may include, but are not limited to, single-walled carbon nanotubes and/or multi-walled carbon nanotubes. The carbon fibers may include, but are not limited to, vapor-grown carbon fibers (VGCF) and/or nano-carbon fibers. The metal materials may include, but are not limited to, metal powder and/or metal fibers, specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. For example, the binder may include, but is not limited to, at least one of polyacrylic acid, sodium polyacrylate, potassium polyacrylate, lithium polyacrylate, polyvinyl alcohol, carboxymethyl cellulose, polyimide, polyamide-imide, styrene-butadiene rubber, or polyvinylidene fluoride. The thickener may include, but is not limited to, at least one of sodium carboxymethyl cellulose or lithium carboxymethyl cellulose. The mass ratio of the negative electrode active material, conductive agent, binder, and thickener in the negative electrode material layer is not particularly limited in the present application, and those skilled in the art can select according to actual needs, as long as the objectives of the present application can be achieved.

Optionally, the negative electrode plate may further include a conductive layer. The conductive layer is located between the negative electrode current collector and the negative electrode material layer. The composition of the conductive layer is not particularly limited and may be a conductive layer commonly used in the art. The conductive layer includes a conductive agent and a binder. The conductive agent and binder in the conductive layer are not particularly limited in the present application. For example, the conductive agent and binder may be at least one of the conductive agents and binders described above.

The positive electrode plate is not particularly limited in the present application, as long as the objectives of the present application can be achieved. For example, the positive electrode plate includes a positive electrode current collector and a positive electrode material layer disposed on at least one surface of the positive electrode current collector. The phrase "a positive electrode material layer disposed on at least one surface of the positive electrode current collector" means that the positive electrode material layer may be disposed on one surface in the thickness direction of the positive electrode current collector or on both surfaces in the thickness direction of the positive electrode current collector. It should be noted that the "surface" herein may be an entire region or a partial region of the surface of the positive electrode current collector. This is not particularly limited in the present application, as long as the objectives of the present application can be achieved.

The positive electrode current collector is not particularly limited in the present application, as long as the objectives of the present application can be achieved. For example, the positive electrode current collector may include a metal foil or a composite current collector. For example, the metal foil may be aluminum foil. The composite current collector may include a polymer material base layer and a metal material layer disposed on at least one surface of the polymer material base layer. The material of the metal material layer may include at least one of aluminum, aluminum alloy, nickel, nickel alloy, titanium, titanium alloy, silver, or silver alloy. The polymer material base layer may include at least one of polypropylene, polyethylene terephthalate, polybutylene terephthalate, polystyrene, or polyethylene. The positive electrode material layer of the present application includes a positive electrode active material. The type of positive electrode active material is not particularly limited in the present application, as long as the objectives of the present application can be achieved. For example, the positive electrode active material may include at least one of lithium cobalt oxide, lithium nickel cobalt manganese oxide ($N_{0.95}C_{0.05}M_{0.05}$, NCM811, NCM622, NCM523, NCM111), lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganese oxide, spinel-type lithium nickel manganese oxide, or lithium titanate.

The thickness of the positive electrode current collector and the positive electrode material layer is not particularly limited in the present application, as long as the objectives of the present application can be achieved. For example, the thickness of the positive electrode current collector may be 5 $\mu$m to 20 $\mu$m. The thickness of the single-sided positive electrode material layer may be 50 $\mu$m to 300 $\mu$m. The positive electrode material layer of the present application may further include the aforementioned binder and conductive agent. The mass ratio of the positive electrode active material, conductive agent, and binder in the positive electrode material layer is not particularly limited in the present application, and those skilled in the art can select according to actual needs, as long as the objectives of the present application can be achieved.

In the present application, the electrolyte includes a lithium salt and an organic solvent. The lithium salt may include, but is not limited to, at least one of lithium hexafluorophosphate ($LiPF_6$), lithium tetrafluoroborate ($LiBF_4$), lithium difluorophosphate

($LiPO_2F_2$), lithium bis(trifluoromethanesulfonyl)imide (LiTFSI), lithium bis(fluorosulfonyl)imide (LiFSI), lithium bis(oxalate)borate (LiBOB), or lithium difluoro(oxalate)borate (LiDFOB). The concentration of the lithium salt in the electrolyte is not particularly limited in the present application, as long as the objectives of the present application can be achieved. The organic solvent is not particularly limited in the present application, as long as the objectives of the present application can be achieved. For example, the organic solvent may include, but is not limited to, at least one of a carbonate compound, a carboxylate compound, an ether compound, or other organic solvents. The carbonate compound may include, but is not limited to, at least one of a linear carbonate compound or a cyclic carbonate compound. The linear carbonate compound may include, but is not limited to, at least one of dimethyl carbonate, diethyl carbonate, dipropyl carbonate, methyl propyl carbonate, ethyl propyl carbonate, or ethyl methyl carbonate. The cyclic carbonate compound may include, but is not limited to, at least one of ethylene carbonate, propylene carbonate, butylene carbonate, or vinyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolide, valerolactone, or caprolactone. The ether compound may include, but is not limited to, at least one of ethylene glycol dimethyl ether, dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, or tetrahydrofuran. The other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The electrolyte may further include an additive. The additive may include, but are not limited to, at least one of fluoroethylene carbonate, 1,3-propane sultone, or adiponitrile.

The secondary battery of the present application may further include a separator for separating the positive electrode plate from the negative electrode plate, preventing internal short circuits in the secondary battery, and allowing electrolyte ions to pass freely without affecting the electrochemical charge-discharge process. The separator is not particularly limited in the present application, as long as the objectives of the present application can be achieved. For example, the material of the separator may include, but is not limited to, at least one of a polyolefin-based separator mainly composed of polyethylene, polypropylene, and polytetrafluoroethylene, a polyester film (such as polyethylene terephthalate (PET) film), a cellulose film, a polyimide film, a polyamide film (PA), a spandex or aramid film. The type of separator may include, but is not limited to, at least one of woven film, non-woven film (nonwoven fabric), microporous film, composite film, laminated film, or spinning film. The separator of the present application may have a porous structure. The porous layer is disposed on at least one surface of the separator and includes inorganic particles and a binder, where the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may include at least one of polyvinylidene fluoride, vinylidene fluoride-hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, or polyhexafluoropropylene. The pore size of the porous structure is not particularly limited in the present application, as long as the objectives of the present application can be achieved. For example, the pore size may be 0.01 μm to 1 μm. The thickness of the separator is not particularly limited in the present application, as long as the objectives of the present application can be achieved. For example, the thickness may be 3 μm to 30 μm.

The secondary battery of the present application further includes a packaging bag for accommodating the positive electrode plate, separator, negative electrode plate, electrolyte, and other components known in the art for secondary batteries, with no limitation imposed by the present application on the aforementioned other components. The packaging bag is not particularly limited in the present application, which may be a packaging bag known in the art, as long as the objectives of the present application can be achieved. For example, an aluminum-plastic film packaging bag may be used.

The secondary battery of the present application is not particularly limited and may include any device where an electrochemical reaction occurs. In one embodiment of the present application, the secondary battery may include, but is not limited to, lithium-ion batteries or sodium-ion batteries.

The preparation process of the secondary battery of the present application is well known to those skilled in the art, and is not particularly limited in the present application. For example, it may include, but is not limited to, the following steps: stacking the positive electrode plate, separator, and negative electrode plate in sequence, and performing operations such as winding or folding as needed to obtain an electrode assembly with a jelly-roll structure, placing the electrode assembly into a packaging bag, injecting the electrolyte into the packaging bag, and sealing to obtain the secondary battery; alternatively, stacking the positive electrode plate, separator, and negative electrode plate in sequence, fixing the four corners of the entire stacked structure with tape to obtain an electrode assembly with a stacked structure, placing the electrode assembly into a packaging bag, injecting the electrolyte into the packaging bag, and sealing to obtain the secondary battery. In addition, components such as overcurrent protection elements or guide plates may be placed in the packaging bag as needed to prevent pressure rise or overcharge/discharge inside the secondary battery.

According to a third aspect of the present application, an electronic device is provided, including the secondary battery according to any one of the above embodiments. The electronic device of the present application is not particularly limited and may be any electronic device known in the prior art. In some embodiments, the electronic device may include, but is not limited to, notebook computers, pen-input computers, mobile computers, e-book readers, portable phones, portable fax machines, portable copiers, portable printers, head-mounted stereo headsets, video recorders, LCD televisions, portable cleaners, portable CD players, mini discs, transceivers, electronic notepads, calculators, memory cards, portable recorders, radios, backup power supplies, motors, automobiles, motorcycles, assisted bicycles, bicycles, lighting fixtures, toys, gaming consoles, clocks, power tools, flashlights, cameras, large household batteries, and lithium-ion capacitors.

**Examples**

Hereafter, lithium-ion batteries are given as examples and comparative examples to describe the implementations of the present application in more detail. Various tests and evaluations are conducted according to the methods described below. In addition, unless otherwise specified, "parts" and "%" are on a mass basis.

**Test methods and devices**

**Sampling method for negative electrode plate and negative electrode active material**

The lithium-ion battery was discharged at a constant current of 1C to a voltage of 3.0 V, after which it was disassembled, and the negative electrode plate was removed. The negative electrode plate was soaked in dimethyl carbonate (DMC) for 20 minutes, followed by sequential rinsing with DMC and acetone. Subsequently, the negative electrode plate was placed in an oven and baked at 80°C for 12 hours to obtain the processed negative electrode plate sample. The negative electrode plate samples used for the porosity test were sampled using the method described above.

The negative electrode material layer was scraped off the negative electrode plate using a scraper, and the scraped powder of the negative electrode material layer was heat-treated in a tube furnace at 400°C for 4 hours under argon protection to remove the binder adhered to the surface of the negative electrode active material, thereby obtaining the negative electrode active material powder sample. The negative electrode active material samples used for the particle size test, sphericity test, X-ray diffraction (XRD) test, tap density test, Raman test, and scanning electron microscope test were all sampled using the method described above.

**Powder particle size test**

The particle size test of the powder was conducted in accordance with GB/T 19077-2016. Specifically, 1 g of the sample was weighed, mixed uniformly with 20 mL of deionized water and a trace amount of dispersant, sonicated in an ultrasonic device for 5 minutes, and then the solution was poured into the Hydro 2000SM sample introduction system for testing. The test device used was the Mastersizer 3000 manufactured by Malvern. During the test, the particle size was measured by analyzing the intensity of scattered light as a laser beam passed through the dispersed particle sample. The data was then used to analyze and calculate the particle size distribution forming the scattering spectrum. The particle refractive index used in the test was 1.8, and each sample was tested three times. The particle sizes Dn10, Dv50, and Dv90 were finally determined as the averages of the three tests. Dn10 represents the particle size at which the cumulative number distribution reached 10% from the smaller particle size side. Dv50 represents the particle size at which the cumulative volume distribution reached 50% from the smaller particle size side. Dv90 represents the particle size at which the cumulative volume distribution reached 90% from the smaller particle size side.

**Sphericity test**

A particle shape image analysis device was used to continuously focus and photograph the particles of the dynamically flowing sample, obtaining 50 particle images. The planar projection area A and the projection perimeter P of each particle in the images were obtained through image processing software, and the sphericity $C = 4\pi A / P^2$ was calculated. The average sphericity of all particles was determined as the final result.

**XRD test**

The XRD test was conducted in accordance with the international standard JIS K *0131-1996 General Rules for X-ray Diffraction Analysis,* using an X-ray diffractometer (model: Bruker D8 ADVANCE) with Cu K$\alpha$ radiation, a voltage of 40 kV, a current of 40 mA, a test angle from 20° to 80°, and a step time of 0.3 s. The negative electrode active material powder was scanned to obtain an XRD pattern, and the peak values of the (004) crystal plane diffraction peak and the (110) crystal plane diffraction peak were analyzed. The ratio of the peak values of the (004) crystal plane diffraction peak to the (110) crystal plane diffraction peak was calculated to obtain the peak intensity ratio I of the characteristic peak C004 and the characteristic peak C110 of the negative electrode active material.

The negative electrode plate was scanned to obtain an XRD pattern, and the peak values of the (004) crystal plane diffraction peak and the (110) crystal plane diffraction peak were analyzed. The ratio of the peak values of the (004) crystal plane diffraction peak to the (110) crystal plane diffraction peak was calculated to obtain the OI value of the negative electrode plate.

An X-ray diffractometer (model: Bruker D8 ADVANCE) with Cu K$\alpha$ radiation, a voltage of 40 kV, a current of 40 mA, a test angle from 52° to 58°, and a step time of 0.3 s was used. A silicon standard with a carbon-to-silicon ratio of C:Si = 5:1 (mass ratio) was scanned as a reference sample, and the XRD pattern of the negative electrode active material powder was processed to obtain the interlayer spacing $d_{002}$ at the (002) peak position of the negative electrode active material. The graphitization degree G of the negative electrode active material was calculated using the formula: $G = (3.44 - d_{002}) / (3.44 - 3.354) \times 100\%$.

**Tap density test**

The tap density test was conducted in accordance with the national standard GB/T *5162-2006 Determination of Tap Density of Metal Powders,* using the McMurray GeoPyc 1365 instrument. A powder sample of 50 ± 0.2 g was weighed, the vibration frequency was set to 250 times/min, and the tap density was measured.

**Raman test**

The Raman spectrum of the negative electrode active material was tested using a laser micro-confocal Raman spectrometer (model: HR Evolution, manufacturer: HORIBA, France), with the laser wavelength of the Raman spectrometer ranging from 532 nm to 633 nm. The powder of the negative electrode active material was subjected to testing, in which a region of 100 $\mu$m $\times$ 100 $\mu$m was scanned. Within this area, particles were scanned and 100 points were tested at equal intervals, with each test point having a test range of 0.02 cm$^{-1}$ to 0.05 cm$^{-1}$. The peak appearing between 1300 cm$^{-1}$

and 1400 cm$^{-1}$ was recorded as the d peak, and the peak appearing between 1500 cm$^{-1}$ and 1600 cm$^{-1}$ was recorded as the g peak. Lab Spec software was used to process the data to obtain the peak intensities of the d peak and g peak of the particles, denoted as $I_d$ and $I_g$, respectively. The intensity ratio $I_d/I_g$ was calculated for each point, and the average of the 100 points was determined as the final $I_d/I_g$ intensity ratio.

**Scanning electron microscope (SEM) test**

A JSM-6360LV scanning electron microscope from JEOL and its accompanying X-ray energy spectrometer were used to analyze the morphology and structure of the negative electrode active material sample. The morphological characteristics of the sample were observed, and scanning electron microscope images were taken.

**Plate porosity test**

The negative electrode plate was prepared into 10-cm diameter discs. 30 samples were tested for each example or comparative example, and each sample had a volume of approximately 0.35 cm$^3$. The porosity of the negative electrode material layer was measured in accordance with the national standard GB/T24586-2009 *Determination of Apparent Density, True Density, and Porosity of Iron Ore,* using an AccuPyc II 1340 true density analyzer with helium as the test gas.

**Rate performance test**

At a temperature of 25°C, the lithium-ion battery was charged at a constant current of 0.2C to 3.6 V, then charged at a constant voltage of 3.6 V until the current reached 0.05C, left standing for 5 minutes, and then discharged at a rate of 0.2C to 2.5 V to obtain the 0.2C discharge capacity. The battery was then charged again at a constant current of 0.2C to 3.6 V, charged at a constant voltage of 3.6 V until the current reached 0.05C, left standing for 30 minutes, and then discharged at a rate of 3C to 2.5 V to obtain the 3C discharge capacity. The 3C/0.2C rate performance of the lithium-ion battery was calculated as 3C discharge capacity / 0.2C discharge capacity $\times$ 100%.

**Cycling performance test**

The lithium-ion battery was placed in a constant temperature chamber at 25°C + 1°C and left standing for 30 minutes. The cycling process was as follows: The battery was charged at a constant current of 0.5C to 3.6 V, then charged at a constant voltage of 3.6 V until the current reached 0.02C, left standing for 15 minutes, then discharged at a rate of 0.5C to 2.5 V, and left standing for 30 minutes; this constituted one charge-discharge cycle. The initial thickness $H_0$ and the initial cycle discharge capacity $C_0$ of the lithium-ion battery were recorded. Subsequently, 3000 cycles were performed according to the above cycling process, with a low-rate capacity recovery performed at the 100th, 200th, 300th, 400th, 500th cycles, every 200 cycles between the 501st and 1500th cycles, and every 500 cycles between the 1501st and 3000th cycles. The low-rate capacity recovery charge-discharge process was as follows: The lithium-ion battery was placed in a constant temperature chamber at 25°C $\pm$ 1°C and left standing for 30 minutes, then underwent the following cycling procedure: charged at a constant current of 0.2C to 3.6 V, then charged at a constant voltage of 3.6 V until the current reached 0.02C, left standing for 15 minutes, then discharged at a rate of 0.2C to 2.5 V, and left standing for 30 minutes. The thickness $H_1$ and cycle discharge capacity $C_1$ of the lithium-ion battery at the 3000th cycle were recorded.

$$\text{3000-cycle capacity retention rate} = C_1/C_0 \times 100\%.$$

$$\text{3000-cycle thickness swelling ratio} = (H_1 - H_0) / H_0 \times 100\%.$$

**Example 1-1**

<Preparation of negative electrode active material>

Natural graphite (particle size 8 $\mu$m, purity 99.5%), artificial graphite precursor component petroleum coke (particle size 10 $\mu$m), and binder pitch (coking value 70%) were mixed uniformly at a mass ratio of x:y:z = 48:48:4 and then placed in a reactor. The temperature in the reactor was raised at a rate of 4°C/min to T1 = 500°C for heat treatment, with a heat treatment time t1 = 4 h. The heat-treated sample was placed in a crucible, and low-temperature graphitization treatment was performed under an argon atmosphere at a temperature T2 = 2200°C for a time t2 = 24 h. The sample was then cooled to room temperature, classified, shaped, sieved, and demagnetized using an electric demagnetizer to obtain the negative electrode active material.

The Dn10, Dv50, Dv90, I, sphericity C, and tap density TD of the negative electrode active material are shown in Table 1.

<Preparation of negative electrode plate>

The negative electrode active material prepared above, binder styrene-butadiene rubber (SBR), and thickener sodium carboxymethyl cellulose (CMC-Na) were mixed at a mass ratio of 97.4:1.5:1.5, added with deionized water as a solvent and stirred uniformly to prepare a negative electrode slurry with a solid content of 50 wt%. The negative electrode slurry was evenly coated on one surface of a 6 $\mu$m thick negative electrode current collector copper foil and dried at 85°C for 4 hours to obtain a negative electrode plate with a coating thickness of 80 $\mu$m for the single-sided negative electrode material layer. The above steps were repeated on the other surface of the copper foil to obtain a negative electrode plate with a double-sided negative electrode material layer. After cold pressing (with a cold pressing pressure of 15 T), cutting, and slitting, the negative electrode plate was obtained with specifications of 76.6 mm × 875 mm.

<Preparation of positive electrode plate>

The positive electrode active material lithium iron phosphate, conductive agent acetylene black, and binder polyvinylidene fluoride (PVDF) were mixed at a mass ratio of 96.3:2.2:1.5, added with N-methylpyrrolidone (NMP) as a solvent and stirred uniformly to prepare a positive electrode slurry with a solid content of 75 wt%. The positive electrode slurry was evenly coated on one surface of a 13 $\mu$m thick positive electrode current collector aluminum foil and dried at 85°C to obtain a positive electrode plate with a positive electrode material layer thickness of 130 $\mu$m. The above steps were repeated on the other surface of the aluminum foil to obtain a positive electrode plate with a double-sided positive electrode material layer. After cold pressing, cutting, and slitting, the positive electrode plate was obtained with specifications of 74 mm × 867 mm.

<Preparation of electrolyte>

In a dry argon atmosphere glovebox, the base solvents ethylene carbonate (EC), propylene carbonate (PC), ethyl methyl carbonate (EMC), and diethyl carbonate (DEC) were mixed at a mass ratio of EC:PC:EMC:DEC = 1:3:3:3, then fluoroethylene carbonate and 1,3-propane sultone were added, dissolved, and stirred uniformly, followed by the addition of lithium salt LiPF$_6$. The mixture was stirred uniformly to obtain the electrolyte. Based on the mass of the electrolyte, the mass percentage of the lithium salt was 12.5%, the mass percentage of fluoroethylene carbonate was 2%, the mass percentage of 1,3-propane sultone was 2%, and the remainder was the base solvent.

<Separator>

A 7 $\mu$m thick polyethylene film (provided by Celgard) was used as the separator.

<Preparation of lithium-ion battery>

The prepared positive electrode plate, separator, and negative electrode plate were stacked in sequence, with the separator placed between the positive electrode plate and the negative electrode plate for separation, and then wound to obtain an electrode assembly. The electrode assembly welded with tabs was placed in an aluminum-plastic film packaging bag and dried in a vacuum oven at 80°C for 12 hours to remove moisture. The prepared electrolyte was injected, and processes such as vacuum sealing, standing, formation (at 45°C, constant current charging at 0.1C, cutoff time 1800 s, then constant current charging at 0.5C to 3.6 V), degassing, and trimming were performed to obtain the lithium-ion battery.

**Examples 1-2 to 1-18**

Same as Example 1-1, except that the parameters were adjusted according to Table 1.

**Examples 2-1 to 2-6**

Same as Example 1-3, except that the parameters were adjusted according to Table 2.

**Comparative Examples 1-1 to 1-4**

Same as Example 1-1, except that the parameters were adjusted according to Table 1.

**Comparative Example 1-5**

Same as Example 1-1, except that the natural graphite in Example 1-1 was directly as the negative electrode active material to prepare the negative electrode plate.

The relevant parameters and performance test results for each example and comparative example are shown in Tables 1 and 2.

**Table 1**

| | D | Dn10 (μm) | Dv50 (μm) | Dv90 (μm) | I | I/D | C | D/C +1 | TD (g/cm³) | Porosity (%) | OI value | 3000-cycle capacity retention rate (%) | 3000-cycle thickness swelling ratio (%) | Rate performance (%) |
|---|---|---|---|---|---|---|---|---|---|---|---|---|---|---|
| Example 1-1 | 1.5 | 1.0 | 16.5 | 25.8 | 6.0 | 4.0 | 0.5 | 4.0 | 0.9 | 25.0 | 15 | 86.3 | 6.7 | 91.1 |
| Example 1-2 | 1.4 | 1.3 | 15.8 | 23.4 | 4.9 | 3.5 | 0.5 | 3.8 | 0.9 | 27.1 | 13 | 86.6 | 6.2 | 91.7 |
| Example 1-3 | 1.3 | 2.1 | 14.3 | 20.7 | 4.2 | 3.2 | 0.5 | 3.6 | 0.9 | 29.6 | 12 | 88.7 | 5.7 | 92.3 |
| Example 1-4 | 1.2 | 2.8 | 12.6 | 17.9 | 3.8 | 3.2 | 0.6 | 3.0 | 1.0 | 32.8 | 10 | 89.2 | 5.4 | 93.1 |
| Example 1-5 | 1.1 | 3.1 | 12.7 | 17.1 | 3.2 | 2.9 | 0.6 | 2.8 | 1.0 | 36.1 | 9 | 89.3 | 5.3 | 94.2 |
| Example 1-6 | 1 | 3.7 | 12.2 | 15.9 | 2.7 | 2.7 | 0.7 | 2.4 | 1.1 | 38.5 | 8 | 92.1 | 4.9 | 95.5 |
| Example 1-7 | 0.9 | 4.6 | 12.4 | 15.8 | 2.5 | 2.7 | 0.8 | 2.1 | 1.0 | 34.5 | 9 | 88.9 | 5.4 | 93.8 |
| Example 1-8 | 0.8 | 5.0 | 11.7 | 14.4 | 2.1 | 2.6 | 0.7 | 2.1 | 0.9 | 31.2 | 10 | 88.2 | 5.6 | 93.0 |
| Example 1-9 | 1.5 | 1.8 | 12.7 | 20.9 | 3.8 | 2.5 | 0.7 | 3.1 | 1.0 | 33.8 | 10 | 87.2 | 5.8 | 91.6 |
| Example 1-10 | 1.3 | 2.4 | 11.5 | 17.4 | 3.0 | 2.3 | 0.8 | 2.6 | 0.8 | 27.6 | 13 | 87.7 | 6.2 | 92.1 |
| Example 1-11 | 1.1 | 3.2 | 14.7 | 19.4 | 2.2 | 2.0 | 0.6 | 2.8 | 0.9 | 32.1 | 10 | 88.3 | 5.6 | 93.4 |
| Example 1-12 | 1.4 | 1.3 | 14.8 | 22.0 | 4.2 | 3.0 | 0.6 | 3.4 | 0.9 | 28.1 | 12 | 87.6 | 5.9 | 91.5 |
| Example 1-13 | 1.3 | 2.1 | 13.8 | 20.0 | 3.7 | 2.8 | 0.7 | 3.0 | 1 | 32.6 | 12 | 89.7 | 5.5 | 92 |
| Example 1-14 | 1.2 | 2.8 | 11.6 | 16.7 | 3.2 | 2.7 | 0.7 | 2.6 | 1 | 34.8 | 10 | 92.2 | 5.1 | 95.7 |
| Example 1-15 | 1.1 | 3.1 | 11.7 | 16.0 | 2.8 | 2.5 | 0.8 | 2.3 | 1 | 36.1 | 9 | 92.3 | 5.1 | 95.9 |
| Example 1-16 | 1 | 3.7 | 11.2 | 14.9 | 2.7 | 2.7 | 0.9 | 2.1 | 1.1 | 40.0 | 8 | 93.1 | 4.6 | 96.2 |
| Example 1-17 | 0.9 | 4.6 | 12.4 | 15.8 | 2.1 | 2.3 | 0.9 | 2 | 1.1 | 34.5 | 9 | 87.9 | 5.6 | 92.4 |
| Example 1-18 | 0.8 | 5.0 | 13.4 | 15.7 | 2.9 | 3.6 | 1 | 1.8 | 1.2 | 31.2 | 10 | 87.2 | 5.8 | 91.8 |
| Comparative Example 1-1 | 1.6 | 0.8 | 16.9 | 27.8 | 6.9 | 4.3 | 0.5 | 4.2 | 1.0 | 24.3 | 21 | 77.1 | 10.2 | 88.7 |
| Comparative Example 1-2 | 0.7 | 5.5 | 10.1 | 12.6 | 1.3 | 1.8 | 0.8 | 1.9 | 0.8 | 23.7 | 17 | 67.1 | 12.5 | 89.9 |
| Comparative Example 1-1 | 2.1 | 0.4 | 21.8 | 46.2 | 7.9 | 3.8 | 0.4 | 6.2 | 0.7 | 24.8 | 21 | 78.3 | 8.2 | 88.5 |
| Comparative Example 1-1 | 0.5 | 6.2 | 13.5 | 13.0 | 1.2 | 2.4 | 1 | 1.5 | 1.3 | 23.2 | 7 | 78.1 | 9.2 | 90.5 |
| Comparative Example 1-5 | 3.0 | 2.1 | 9.2 | 29.8 | 4.5 | 1.5 | 0.6 | 6.0 | 0.8 | 21.9 | 32 | 44.7 | 16.9 | 84.8 |

From Examples 1-1 to 1-18 and Comparative Examples 1-1 to 1-5, it can be seen that when the D value and I/D value of the negative electrode active material fall within the ranges defined in the present application, the obtained lithium-ion batteries exhibit a higher cycle capacity retention rate and a lower thickness swelling ratio, indicating that the lithium-ion batteries of the present application have better cycling performance and swelling behavior.

From Examples 1-1 to 1-18, it can be seen that Dn10, Dv50, Dv90, C, and TD of the negative electrode active material are interrelated and influence each other, thereby affecting the values of D, I, I/D, and D/C + 1. When the values of these characteristics fall within the ranges defined in the present application, the porosity and OI value of the obtained negative electrode plate also falls within the ranges defined in the present application, and the lithium-ion batteries all exhibit a higher cycle capacity retention rate and a low cycle thickness swelling ratio, indicating that the lithium-ion batteries have good cycling performance and swelling behavior.

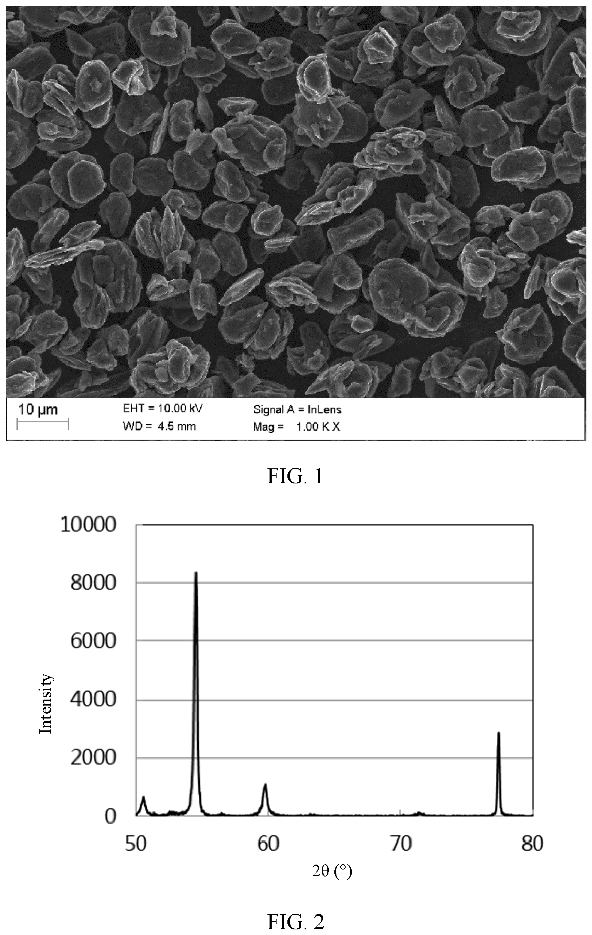

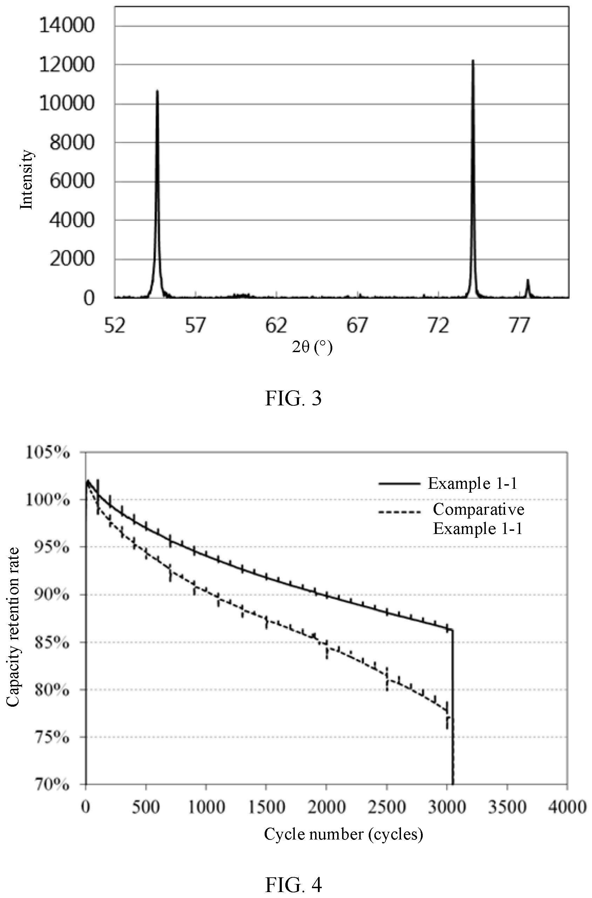

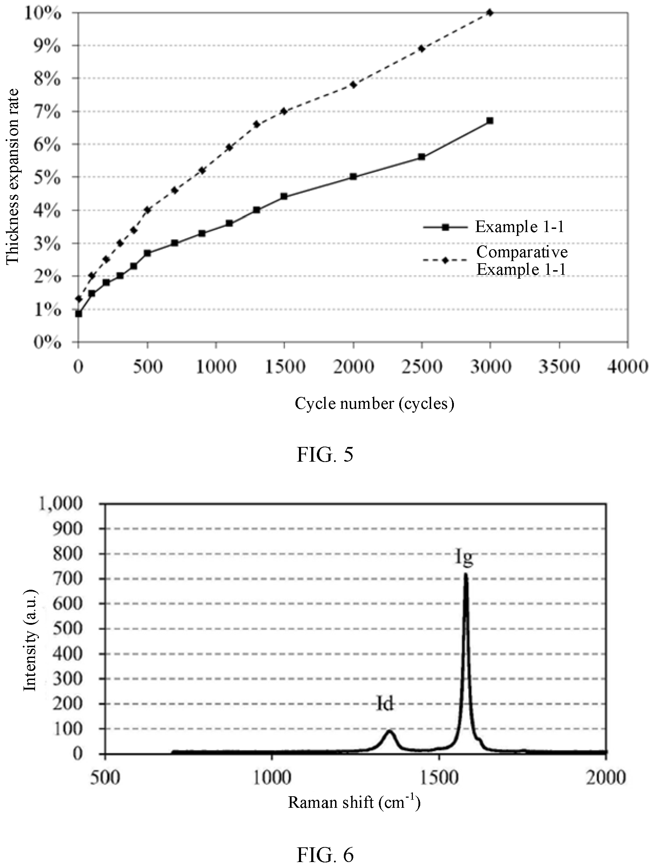

Specifically, FIG. 1 is an electron microscope image of the negative electrode active material in Example 1-1. From the electron microscope image, it can be seen that the particle size of the negative electrode active material is relatively uniform. This facilitates the diffusion of lithium ions and the electronic conductivity, thereby improving the cycling performance and rate performance of the lithium-ion battery. FIG. 2 is an XRD pattern of the negative electrode active material in Example 1-3. As shown in the figure, the characteristic peak C004 at 54.56° has a peak area of 3021.82, and the characteristic peak C110 at 77.41° has a peak area of 712.44, resulting in a peak area ratio I of the characteristic peak C004 and the characteristic peak C110 of 4.2. FIG. 3 is an XRD pattern of the negative electrode plate in Example 1-3. As shown in the figure, the (004) crystal plane diffraction peak at 54.65° has a peak area of 2665.10, and the (110) crystal plane diffraction peak at 77.49° has a peak area of 222.09, resulting in an OI value of the negative electrode plate of 12. FIG. 4 and FIG. 5 are graphs of cycle capacity retention and thickness swelling ratio versus cycle number for the lithium-ion batteries of Example 1-1 and Comparative Example 1-1. As shown in the figures, the cycle capacity retention rate of Example 1-1 is consistently higher than that of Comparative Example 1-1, and the thickness swelling ratio is consistently lower than that of Comparative Example 1-1.

**Table 2**

| | x:y:z | T1 (°C) | t1 (h) | T2 (°C) | t2 (h) | G (%) | W (mAh/g) | Id/Ig | Porosity (%) | OI value | 3000-cycle capacity retention rate (%) | 3000-cycle thickness swelling ratio (%) | Rate performance (%) |
|---|---|---|---|---|---|---|---|---|---|---|---|---|---|
| Example 1-3 | 48:48:4 | 500 | 4 | 2600 | 24 | 95.5 | 356 | 0.13 | 29.6 | 12 | 88.7 | 5.7 | 92.3 |
| Example 2-1 | 60:38:2 | 500 | 6 | 2600 | 24 | 96.0 | 358 | 0.10 | 26.3 | 17 | 87.1 | 6.2 | 91.7 |
| Example 2-2 | 48:48:4 | 500 | 4 | 2200 | 24 | 93.5 | 352 | 0.23 | 31.2 | 11 | 89.4 | 5.4 | 93.2 |
| Example 2-3 | 48:48:4 | 500 | 4 | 1800 | 36 | 90.0 | 344 | 0.30 | 34.9 | 10 | 92.2 | 5.2 | 93.7 |
| Example 2-4 | 38:58:4 | 800 | 6 | 2400 | 24 | 92.5 | 348 | 0.26 | 40.0 | 8 | 93.1 | 4.9 | 94.5 |
| Example 2-5 | 38:60:2 | 800 | 6 | 1800 | 24 | 89.1 | 334 | 0.37 | 42.5 | 7 | 82.1 | 8.2 | 95.7 |
| Example 2-6 | 80:16:4 | 300 | 2 | 2600 | 24 | 97.7 | 361 | 0.08 | 23.1 | 19 | 78.8 | 9.4 | 91.3 |

From Example 1-3 and Examples 2-1 to 2-6, it can be seen that the graphitization degree G, specific capacity W, and Id/Ig value of the negative electrode active material vary with the preparation parameters and are interrelated and influence each other. When the values of these characteristics fall within the ranges defined in the present application, the porosity and OI value of the obtained negative electrode plate also fall within the ranges defined the present application, and the lithium-ion batteries all exhibit a higher cycle capacity retention rate and a lower cycle thickness swelling ratio, indicating that when the graphitization degree G, specific capacity W, and Id/Ig of the negative electrode active material fall within the ranges defined in the present application, the lithium-ion batteries have better cycling performance and swelling behavior.

Specifically, FIG. 6 is a Raman spectrum of the negative electrode active material in Example 1-3, showing that the d peak has a peak intensity of 89.52, and the g peak has a peak intensity of 710.92, resulting in an Id/Ig value of 0.13 for the negative electrode active material.

It should be noted that in this document, the terms "include," "comprise," or any other variants thereof are intended to cover non-exclusive inclusion, such that a process, method, article, or device including a series of elements includes not only those elements but also other elements not explicitly listed or elements inherent to such process, method, article, or device.

Each embodiment in this specification is described in a related manner, and the same or similar parts between these embodiments can be referred to each other, with each embodiment focusing on the differences from other embodiments.

**Claims**

1. A negative electrode active material comprising graphite, wherein Dn10, Dv50, and Dv90 of the negative electrode active material satisfy: D = (Dv90 - Dn10) / Dv50, and $0.8 \leq D \leq 1.5$; wherein

   Dn10 of the negative electrode active material is 1 $\mu$m to 5 $\mu$m;
   in an X-ray diffraction pattern of the negative electrode active material, a peak intensity ratio of a characteristic peak C004 to a characteristic peak C110 is I;
   the negative electrode active material satisfies: $2 \leq I/D \leq 4$.

2. The negative electrode active material according to claim 1, wherein $2 \leq I \leq 6$.

3. The negative electrode active material according to claim 1 or 2, wherein the negative electrode active material satisfies at least one of the following conditions:

   (1) Dn10 is 2 $\mu$m to 4 $\mu$m;
   (2) Dv90 is 14 $\mu$m to 30 $\mu$m;
   (3) Dv50 is 8 $\mu$m to 15 $\mu$m;
   (4) $2 \leq I \leq 4$; or
   (5) the graphite comprises natural graphite and artificial graphite.

4. The negative electrode active material according to any one of claims 1 to 3, wherein a sphericity C of the negative electrode active material is defined as $C = 4\pi A / P^2$, and $0.5 \leq C \leq 1$, wherein A is an area of an orthographic projection of a particle of the negative electrode active material, and P is a perimeter of the orthographic projection of the particle of the negative electrode active material; wherein
   the negative electrode active material satisfies: $1.8 \leq D/C + 1 \leq 4$.

5. The negative electrode active material according to any one of claims 1 to 4, wherein the negative electrode active material satisfies at least one of the following conditions:

   (a) a tap density TD of the negative electrode active material is 0.8 g/cm$^3$ to 1.2 g/cm$^3$;
   (b) a graphitization degree G of the negative electrode active material is 90% to 96%; or
   (c) a specific capacity W of the negative electrode active material is 344 mAh/g to 358 mAh/g.

6. The negative electrode active material according to any one of claims 1 to 5, wherein $0.8 \leq D \leq 1.3$.

7. The negative electrode active material according to any one of claims 1 to 6, wherein $2.4 \leq I/D \leq 3.5$.

8. The negative electrode active material according to any one of claims 1 to 7, wherein in a Raman spectrum of the negative electrode active material, a peak intensity ratio Id/Ig of a d peak to a g peak is 0.1 to 0.3.

9. A secondary battery comprising a positive electrode plate, a negative electrode plate, and an electrolyte; wherein the negative electrode plate comprises a negative electrode current collector and a negative electrode material layer disposed on at least one surface of the negative electrode current collector, the negative electrode material layer comprising the negative electrode active material according to any one of claims 1 to 8.

10. The secondary battery according to claim 9, wherein the negative electrode plate satisfies at least one of the following conditions:

(i) a porosity of the negative electrode plate is 25% to 40%; or
(ii) an OI value of the negative electrode plate is 8 to 15.

11. An electronic device comprising the secondary battery according to claim 9 or 10.

FIG. 1

FIG. 2

FIG. 3

FIG. 4

FIG. 5

FIG. 6

## INTERNATIONAL SEARCH REPORT

| International application No. |
|---|
| **PCT/CN2024/105936** |

| A. | CLASSIFICATION OF SUBJECT MATTER |
|---|---|

H01M 4/587(2010.01)i; H01M 10/0525(2010.01)i; H01M 4/133(2010.01)i; H01M 4/04(2006.01)i

According to International Patent Classification (IPC) or to both national classification and IPC

| B. | FIELDS SEARCHED |
|---|---|

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNTXT, VCN, ENTXTC, CNKI, ISI_Web of Science: 负极活性材料, 负极极片, 二次电池, 电子设备, 石墨, Dn10, Dv50, Dv90, X射线衍射, 特征峰, 循环性能, negative electrode active material, negative electrode plate, secondary battery, electronic equipment, graphite, X-ray diffraction pattern, characteristic peak, cycle performance

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117059800 A (NINGDE AMPEREX TECHNOLOGY LTD.) 14 November 2023 (2023-11-14) <br> claims 1-12, and description, paragraphs [0071]-[0072] and [0075] | 1-11 |
| X | WO 2021108981 A1 (CONTEMPORARY AMPEREX TECHNOLOGY CO., LTD.) 10 June 2021 (2021-06-10) <br> description, page 1, paragraph 4-page 2, paragraph 9 and page 4, paragraph 2-page 16, paragraph 6 | 1-11 |
| A | CN 115939493 A (DONGGUAN AMPEREX TECHNOLOGY LTD.) 07 April 2023 (2023-04-07) <br> entire document | 1-11 |
| A | CN 113437250 A (NINGDE AMPEREX TECHNOLOGY LTD.) 24 September 2021 (2021-09-24) <br> entire document | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 September 2024** | **23 September 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/105936**

| C. | DOCUMENTS CONSIDERED TO BE RELEVANT | | |
|---|---|---|---|
| Category* | Citation of document, with indication, where appropriate, of the relevant passages | | Relevant to claim No. |
| A | CN 114975996 A (NINGDE AMPEREX TECHNOLOGY LTD.) 30 August 2022 (2022-08-30) entire document | | 1-11 |
| A | WO 2022160332 A1 (NINGDE AMPEREX TECHNOLOGY LTD.) 04 August 2022 (2022-08-04) entire document | | 1-11 |

Form PCT/ISA/210 (second sheet) (July 2022)

**INTERNATIONAL SEARCH REPORT**
Information on patent family members

International application No.

**PCT/CN2024/105936**

| Patent document cited in search report | | | Publication date (day/month/year) | Patent family member(s) | Publication date (day/month/year) |
|---|---|---|---|---|---|
| CN | 117059800 | A | 14 November 2023 | None | |
| WO | 2021108981 | A1 | 10 June 2021 | None | |
| CN | 115939493 | A | 07 April 2023 | None | |
| CN | 113437250 | A | 24 September 2021 | None | |
| CN | 114975996 | A | 30 August 2022 | None | |
| WO | 2022160332 | A1 | 04 August 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311017464